# EUROPEAN PATENT SPECIFICATION

(11) **EP 0 663 763 B1**
(45) Date of publication and mention of the grant of the patent: **14.02.2001**
(21) Application number: 94420358.7
(22) Date of filing: 15.12.1994
(51) Int. Cl.: H04N 3/15

(54) **CCD image sensor having reduced photodiode-to-photodiode crosstalk**
CCD-Bildsensor mit verringerter Übersprechung zwischen Photodioden
Capteur d'image CCD avec diaphonie réduite entre photodiodes

(30) Priority: 20.12.1993 US 169946
(43) Date of publication of application: 19.07.1995
(73) Proprietor: EASTMAN KODAK COMPANY, Rochester, New York 14650-2201 (US)
(72) Inventor: Philbrick, Robert H., c/o Eastman Kodak Co., Rochester, New York 14650-2201 (US); Erhardt, Herbert J., c/o Eastman Kodak Co., Rochester, New York 14650-2201 (US)
(74) Representative: Buff, Michel

(56) References cited:
- EP-A- 0 376 265
- GB-A- 2 152 328
- IEEE TRANSACTIONS ON ELECTRON DEVICES, vol. ED-32, no. 8, August 1985, NEW-YORK (US), pages 1541-1545, XP002028096 YUZUKI ET AL.: "A 5732-Element Linear CCD Image Sensor"
- PATENT ABSTRACTS OF JAPAN vol. 006, no. 147 (E-123), 6 August 1982 & JP 57 069979 A (SANYO ELECTRIC CO LTD), 30 April 1982,
- PATENT ABSTRACTS OF JAPAN vol. 007, no. 072 (E-166), 25 March 1983 & JP 58 001381 A (TOKYO SHIBAURA DENKI KK), 6 January 1983,

## Description

### Field of the Invention

The invention relates to CCD image sensor and more particularly to an improved image sensor having ultra-high sampling abilities, low photodiode-to-photodiode crosstalk, high charge storage density, and electronic exposure control.

### BACKGROUND OF THE INVENTION

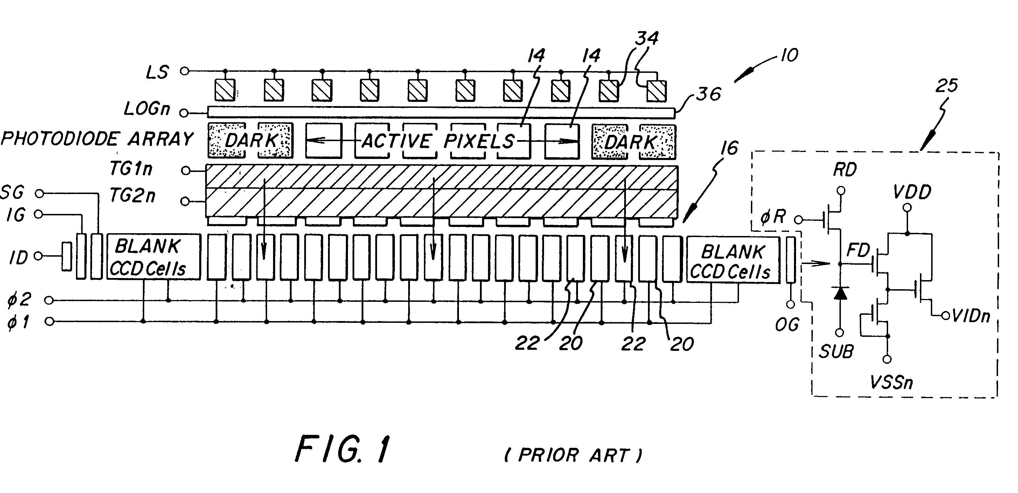

Referring now to Fig. 1, there is shown a top plane schematic view of a conventional CCD imager. CCD imager 10 comprises a body of a semiconductor material having therein a plurality of imaging photodetectors 14. As shown, the imaging photodetectors 14 are arranged in an array of a line for a linear array. However, the photodetectors 14 can be arranged in an array of rows and columns for an area array. Each of the imaging photodetectors can be of any well known type of photodetectors, such as a photodiode or photocapacitor, which receives photons and converts the photons to charge carriers. Along one side of the line of imaging photodetectors 14 is a CCD shift register 16. CCD shift register 16 comprises a channel region (not shown) extending along and spaced from the line of photodetectors 14. If the channel region is a buried channel, it is a region of a conductivity type opposite that of the body of the CCD imager. A plurality of first gate electrodes 20 are over and insulated from the channel region. The first gate electrodes 20 are spaced along the channel region with each of the first gate electrodes 20 being adjacent a separate imaging photodetector 14. A plurality of second gate electrodes 22 are over and insulated from the channel region. The second gate electrodes 22 are arranged in alternating relation with the first gate electrodes 20 with each of the second gate electrodes 22 being adjacent a separate imaging photodetector 14. Thus there are two gate electrodes, one first gate electrode 20 and one second gate electrode 22 adjacent each imaging photodetector 14 to form a two-phase CCD shift register 16. The gate electrodes 20 and 22 are of a conductive material, such as conductive polycrystalline silicon, and are insulated from the channel region by a layer of an insulating material (not shown), typically silicon dioxide. The first gate electrodes 20 are all connected to a first clock phase Φ1 and the second gate electrodes are all connected to a second clock phase Φ2.

Transfer gates TG1n and TG2n extend over and are insulated from the body of the imager between the imaging photodetectors 14 and the channel region of the CCD shift register 16. Although two transfer gates are depicted here, it will be appreciated that only one transfer gate is really necessary. At the conclusion of an integration period, the collected photogenerated charges in each pixel are transferred to the adjacent CCD cell by applying the appropriate voltage biases to the TG1n and TG2n pins while the CCD remains in the idle state. At the conclusion of the charge transfer, the transfer gate clocks are returned to the isolation potentials and the CCD clocking resumes. As each charge packet is clocked over the OG potential at the end of the CCD, a corresponding change in output voltage at the VIDn pin of an output circuit 25 is observed.

A separate exposure drain region 34 is in the body of the imager, adjacent to, but spaced from the side of each imaging photodetector 14 opposite the CCD shift register 16. An exposure control gate 36 extends over and is insulated from the body of the imager between the imaging photodetectors 14 and the exposure drain regions 34. A potential is applied to the exposure control gate 36 (through pin LOGn) during a portion of the start of an integration period which lowers the potential barrier height between the imaging photodetectors 14 and the exposure drain regions 34. While the potential is applied, all charge carriers generated in the photodetectors 14 flow into the exposure drain regions 34 where they are carried away. After a desired period, the potential on the exposure control gate 36 is lowered, forming a barrier potential between the imaging photodetectors 14 and the exposure drain regions 34. This allows charges to be collected in the photodetectors 14 for the remainder of the integration period. Hence, the effective exposure time is limited to the duration while the exposure control gate potential is lowered. Such an electronic exposure structure is used in linear imagers containing multiple channels, each with a different color separation filter, to balance the photoresponse of each channel to the light source; thus achieving the maximum dynamic range in each channel (or color). The electronic exposure function is highly valued for multi-array linear imagers.

A more detailed description of the operation of CCD based solid state imagers can be found in J.D.E. Beynon, "Charge-Coupled Devices And Their Applications", McGraw-Hill, New-York, 1979 and M.J. Howes, "Charge-Coupled Devices and Systems" John Wiley and Sons, New-York, 1979.

One problem with the channel architecture shown in Fig. 1 is that for very small pixel pitch lengths (typically less than 9µm), several of the imager performance attributes are degraded. In particular, the Modulation Transfer Function (MTF) is decreased by the increase in photodiode-to-photodiode crosstalk and the charge density is reduced within the CCD by two-dimensional field effects. Such a problem of diffusion degradation of Modulation Transfer Function is depicted by David H. Seib in "Carrier Diffusion Degradation Of Modulation Transfer Function In Charge Coupled Imagers" in IEEE Transactions On Electron Devices, Vol. Ed 21, No. 3, March 1974 pp. 210-217. Also, for pixel pitch dimensions of less than 7µm, the layout dimensions shrink below fabrication design limits.

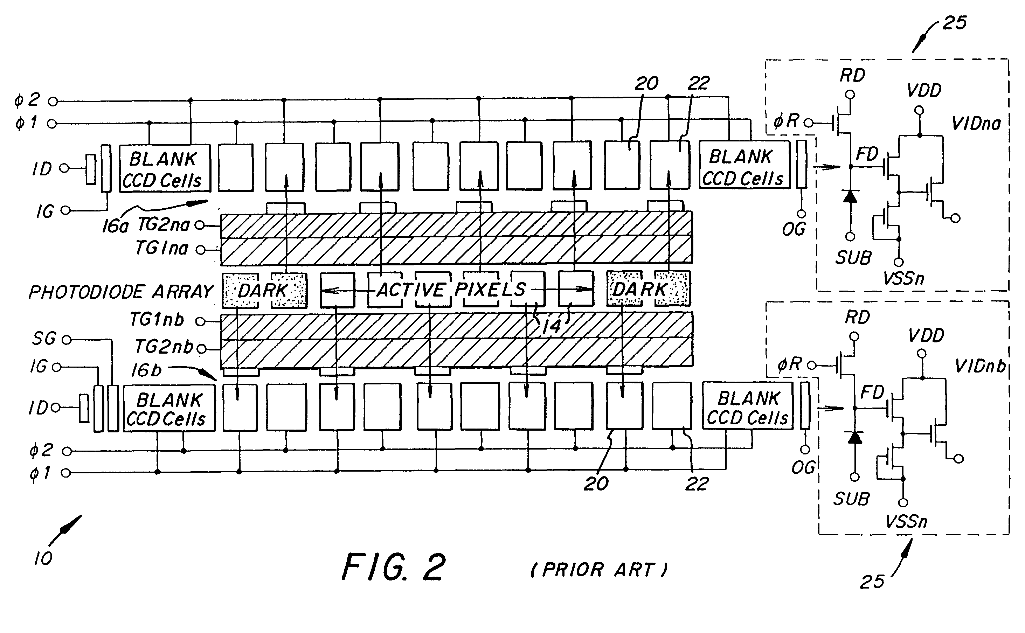

Fig. 2 shows a bi-linear imager architecture which improves the charge storage density by allowing each CCD cell (20 & 22) to be two pixel pitch wide, as opposed to the one-to-one relationship in Fig. 1. To this end, transfer gates (TG1n and TG2n) along with their associated CCD shift registers (20 and 22) are provided on both sides of the imaging photodetectors 14. Via transfer gates TG1na, TG2na and TG1nb, TG2nb, the stored charges beneath each photosite 14 is transferred to their respective shift registers 16a and 16b. As can be seen from Fig. 2, all the odd photosites are coupled to shift register 16b and all the even photosites are coupled to shift register 16a. At the proper time, the information is shifted out to the right (or left) side of the device 10 to output circuits 25. Subsequent circuitry is then used to mix the outputs from circuits 25 such that the output pulse train is representative of the input applied light information. Such a structure has been used for example in the Kodak® KLI-5001 linear imager. However, this architecture does not include an electronic exposure circuitry and the layout design rules will again limit the pixel pitch dimensions, so that pitches less than 7µm cannot be reasonably obtained. Furthermore, such a structure suffers from increased photodiode-to-photodiode crosstalk for small pixel pitches, thus reducing the overall MTF.

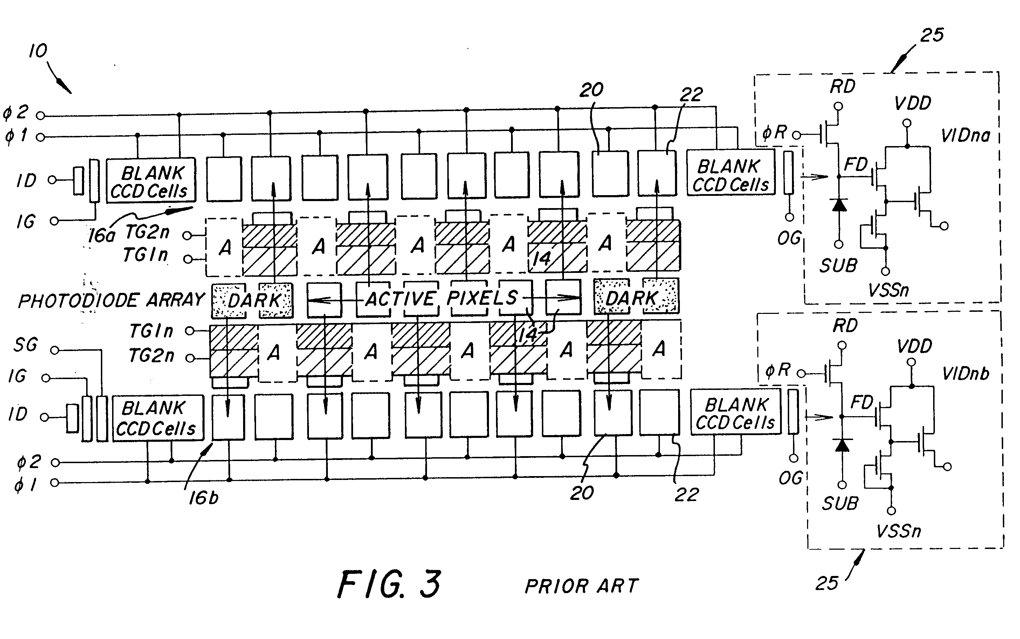

Fig. 3 to which it is now made reference illustrates a slightly different version of the circuit shown in Fig. 2. According to this structure, the imager 10 is provided with an electronic exposure circuit (A) which has been added in the "gap" between adjacent transfer gate regions (TG1n and TG2n). Such an architecture has been used by Farchild® in the CCD181 linear imager. The problem with such a structure is that, as the pixel pitch becomes small (typically, less than 7µm), the above mentioned gap between adjacent transfer gate regions becomes too small to incorporate an electronic exposure structure. In addition, as for the structure of Fig. 2, this design suffers from increased photodiode-to-photodiode crosstalk for small pixel pitches, thus reducing the overall MTF.

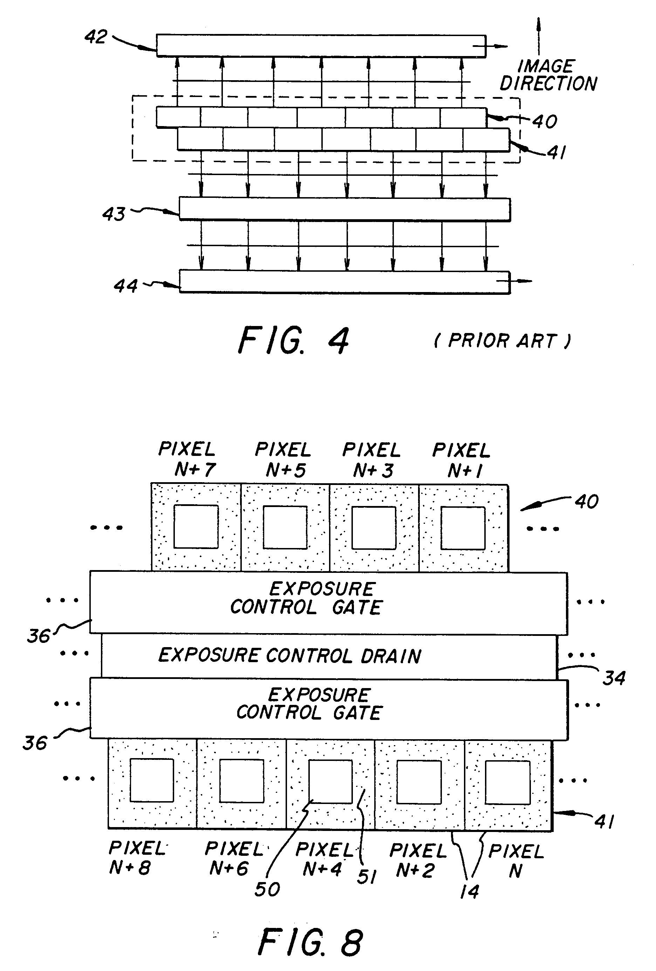

Another approach is described in U.S. Patent No. 4,432,017 issued to Stoffel et al on February 14, 1984 as well as in IEEE International Solid State Circuits Conference; 1984; pp 36-37. This is illustrated in Fig. 4. The illustrated CCD array comprises a first row 40 of contiguous photosites and a second row 41 of contiguous photosites. The first row is contiguous with the second one. The second row 41 is offset from the first row of photosites by approximately one-half the length of photosites on the first row such that the second row of photosites is sensitive to light information applied between adjacent photosites of the first row. Shift registers 42, 43, 44 are provided adjacent to both first and second rows so as to collect the photogenerated charges, the output of registers 42 and 44 being multiplexed to generate a single output pulse train representative of the information scanned. As it appears from Fig. 4, there is no "non-photodetecting" area between two adjacent photodetecting apertures of a row as well as no "non photodetecting" area between the apertures of the first row and the adjacent apertures of the second row. Such a structure produces a substantial improvement in terms of aliasing. However, there is no improvement of the MTF. Furthermore, because of the photodiode-to-photodiode crosstalk which is a consequence of the close physical locations of the photodiode arrays, a less than ideal MTF is obtained. Last, such a design does not contain any electronic exposure capabilities.

A system similar with the same drawbacks is also described in U.S. Patent No. 4,712,137 issued to Kadekodi et al on December 8,1987.

An improvement to the system described in US-A-4,712,137 or US-A-4,432,017 is described in IEEE Transactions on Electron devices Vol. ED-32 No 8 of August 1985, on pages 1541 to 1544 of Yuzuki et al and entitled "A 5732 - Element Linear CCD Image Sensor". Figure 2C of that article describes the use of a metal layer covering half of each photosensor. No overlap between adjacent pixels occurs, increasing the MTF. The light shield described on that Fig2c is positioned on a side of the photosensor. The invention proposes to further increase the MTF.

JP-A-57069979 describes a two dimension solid state image sensor having columns and rows of photosites. Located between two rows of sensors, an overflow drain is associated with barrier sections on both sides of the drain so that blooming can be prevented.

### SUMMARY OF THE INVENTION

Accordingly, it is an object of the present invention to provide an improved CCD image sensor that overcomes the inadequacies mentioned in the above discussion with respect to conventional systems.

This object is achieved by providing a CCD image sensor as defined in claim 1.

These and other objects of the present invention will become more apparent when taken in conjunction with the following description and drawings wherein like characters indicate like parts and which drawings form a part of the present description.

The following are advantages of the present invention: it provides ultra-high spatial sampling, low photodiode-to-photodiode crosstalk, and high charge storage density. In addition it allows the incorporation of an electronic exposure structure.

### BRIEF DESCRIPTION OF THE DRAWINGS

FIG. 1 schematically represents the layout of a single channel of a linear imager as known in the PRIOR ART;
FIG. 2 shows the layout architecture of a single channel of another linear imager as known in the PRIOR ART;
FIG. 3 represents the layout architecture of another linear imager as known in the PRIOR ART;
FIG. 4 schematically represents the architecture of another device of the PRIOR ART;
FIG. 5 illustrates a first embodiment of the CCD imager of the invention;
FIG. 6 is an expanded view of the arrangement of the photodetectors in the CCD imager of FIG. 5;
FIG. 7 represents the layout architecture of a preferred embodiment of the CCD imager of the invention;
FIG. 8 shows another representation of the CCD imager of Fig. 7;
FIG. 9 represents another embodiment of the CCD imager of the invention; and
FIG. 10 is a cross-section view along line CC' of the CCD imager shown in Fig. 7.

### DETAILED DESCRIPTION OF THE PREFERRED EMBODIMENTS

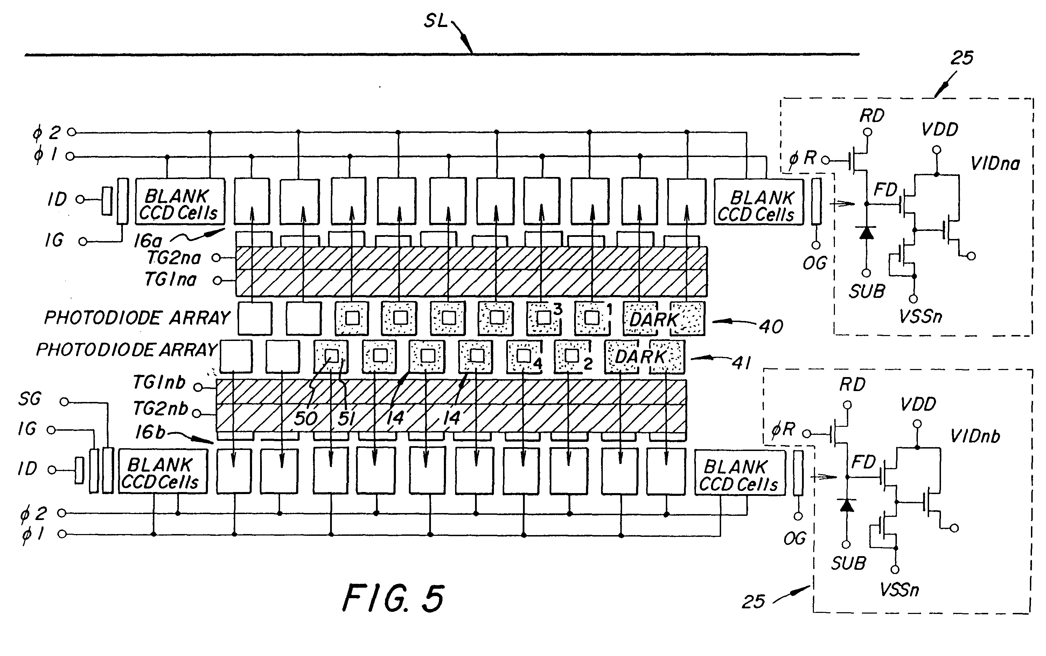

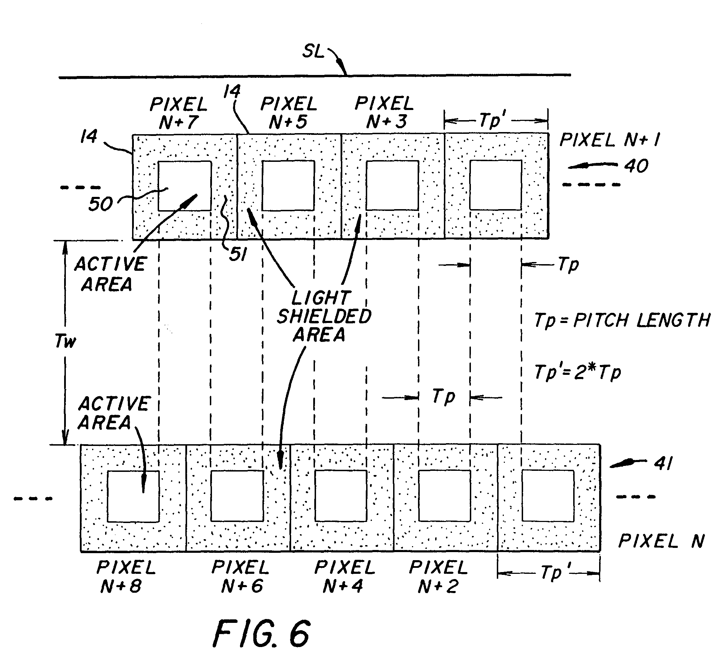

Fig. 5 to which it is now made reference represents a first embodiment of the CCD image sensor according to the invention. The general structure of the system is similar to the one described in the above mentioned U.S. patents. The CCD image sensor according to the invention comprises a first 40 and a second 41 linear arrays of individual imaging photodetectors 14 aligned along a scanning line SL. As shown in more detail in Fig. 6, the first array 40 corresponds to the array of even pixels (n+1, n+3, n+5, n+7, etc.), the second one 41 corresponds to the array of odd pixels (n, n+2, n+4, n+6, etc.). These photodetectors 14 sense light information applied thereon through a photodetecting aperture 50 and convert this light information to charge carriers. The charge carriers are collected in a collecting area located under the photodetecting aperture 50. As it appears from Fig. 6, adjacent photodetecting apertures of both first and second arrays are separated by a light shielding layer 51 so that two adjacent photodetecting apertures are separated by a non-photodetecting area. As a result, a very high aperture MTF can be obtained. Also, a low diffusion crosstalk between photodiodes of the arrays can be obtained.

According to another feature of the invention, the second linear array 41, parallel to the first one 40, is offset from the first one along the scanning line SL by a distance which is substantially equal to the width Tₚ of the photodetecting apertures 50 so that, with a non-photodetecting area 51 having substantially the width of the apertures 50, substantially all the light information applied between adjacent photodetecting apertures of the first array is sensed by photodetecting apertures of the second array, thus providing a continuous spatial coverage over the full image length to be scanned.

Advantageously, as shown in Figs. 5 and 6, in order to lower the crosstalk between photodiodes of the first array and photodiodes of the second array, the light shielding layer 51 is provided all around the photodetecting apertures so that the photodetecting apertures of the first array 40 are separated from the photodetecting apertures of the second array by a non-photodetecting non-photodetecting area. Advantageously, besides this area, a further non-photodetecting space T_{w} can be provided between the two linear arrays. For example, such a space could be as wide as four times the width of the photodetecting aperture. According to one embodiment, this space is efficiently used by implanting under this non photodetecting space a structure, such as a drain to further minimize crosstalk between first array 40 and second array 41, thereby effectively reducing the photosite-to-photosite crosstalk. Alternatively, an electronic exposure structure can be positioned within this space. This will be described hereafter in more detail. Such a design can accommodate very small pixel apertures, such as 5µm or less. The pitch of the photodetectors, i.e. the distance Tₚ, would be in this example 10µm.

The CCD image sensor according to the invention also comprises transfer gates (TG1na, TG2na, TG1nb, TG2nb) located on both sides of the photodetecting arrays for, as explained in the background of the invention, transferring the charge carriers generated by the photodetectors into the shift registers 16a and 16b. The first shift register 16a, adjacent to the first array 40 receives and temporarily stores the charge carriers generated by the imaging photodetectors of the first array 40. The second shift register 16b receives and temporarily stores the charge carriers generated by the imaging photodetectors of the second array 41. Output circuits 25 are provided at one of the ends of each of the shift registers 16a, 16b to collect, amplify and transfer the shifted signals to an output device, multiplexing means (not shown) being used to combine the signals issued from output circuits 25, so as to provide the information related to the full line being scanned.

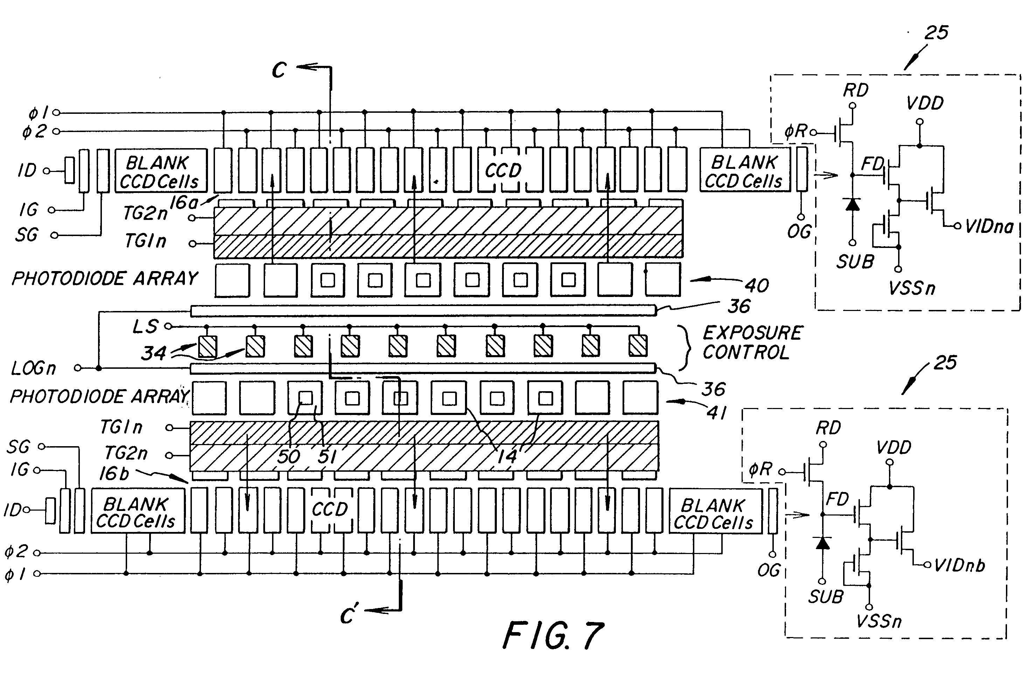

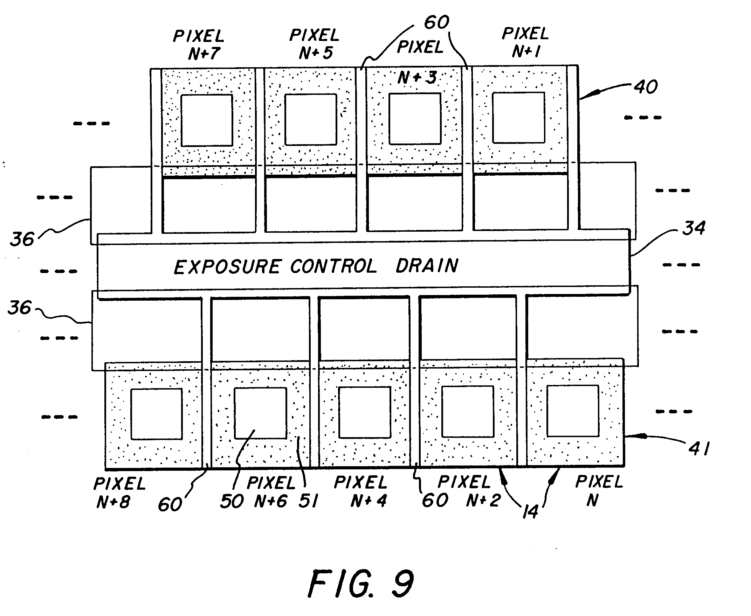

Fig. 7 represents a imager which slightly differs from the one shown in Fig. 5 in that an electronic exposure structure 34, 36 has been provided between the two linear arrays of photodetectors 40, 41. Such a structure is used for controlling the exposure of both photodiode arrays 40, 41. Typically, such a structure comprises two exposure control gates 36 adjacent to each photodiode array and exposure drain regions 34 located between the two exposure control gates 36. The diode portion of such an exposure control circuitry also provides photodiode-to photodiode crosstalk suppression from even-to-odd and even-to-odd photodiodes as described earlier. Such a structure, also shown in more detail in Fig. 8, is well known and accordingly does not need any more detailed description.

Fig. 9 illustrates another embodiment of the imager according to the invention and in which isolation regions, such as isolation diode fingers 60 have been provided between adjacent photodetectors in each of the arrays. Such isolation diodes collect diffusing photogenerated charges and thus reduce the photodiode-to-photodiode crosstalk between pixels within a photodiode array.

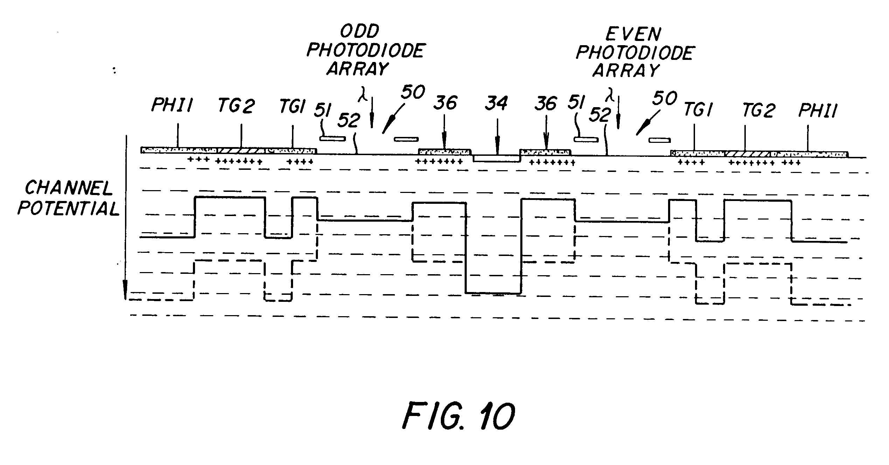

Fig. 10 to which it is now made reference represents a cross section view along line CC' of the imager of Fig. 7. Also shown in Fig. 10 is the channel potential of the imager during integration periods (continuous line) and during transfer periods (interrupted line). According to a preferred embodiment of the invention, the surface of the collection area 52 under the photodetecting apertures 50 is greater than the surface of the apertures. This improves the collection efficiency of the image sensor.

The invention has been described in detail with particular reference to certain preferred embodiments thereof, but it will be understood that variations and modifications can be effected within the scope of the invention as defined by the claims.

## Claims

1. A CCD image sensor (10) comprising:
(a) a first (40) and a second (41) linear arrays of individual imaging photodetectors aligned along a scanning line (SL), each of said imaging photodetectors (14) having a collecting area presenting a length in a direction parallel to the scan line and a width to collect charge carriers provided by light information applied on said imaging photodetectors;
(b) a light shield (51) on each of said imaging photodetectors having, in the direction parallel to the scan line, a length substantially equal to half the length of each of said imaging photodetectors in order to provide photodetecting apertures (50) of a length less than the length of the imaging photodetectors so that, in the direction parallel to the scan line, adjacent photodetecting apertures in said first and second linear arrays are separated from each other by non photodetecting areas;
(c) said second linear array (41) being parallel to said first array (40) and offset from said first linear array along said scanning line by approximately half of the size of a photodetector length such that substantially all the light information applied between adjacent photodetecting apertures of said first linear array is sensed by photodetecting apertures of said second linear array;
(d) first CCD register means (16a) adjacent to said first linear array for receiving and temporarily storing the charge carriers generated by the imaging photodetectors of said first linear array; and
(e) a second CCD register (16b) adjacent to said second linear array for receiving and temporarily storing the charge carriers generated by the imaging photodetectors of said second linear array.
characterized by:
(f) said first and second linear arrays of individual photodetectors being non overlapping and non adjacent to each other along a direction perpendicular to the scan line;
(g) each of said individual imaging photodetectors having a photodetecting aperture (50) formed with dimensions essentially equal to half the length and half the width and centered within the imaging photodetector and said light shield (51) area surrounding the photodetecting area consuming the remaining area of the imaging photodetector; and
(h) an electronic exposure structure for controlling the light exposure of said first and second linear arrays, said electronic exposure structure being located between said first and second linear arrays.

2. A CCD image sensor according to claim 1 wherein said electronic exposure structure comprises:
i) a first exposure control gate (36) adjacent to said first linear array;
ii) a second exposure control gate (36) adjacent to said second linear array; and
iii) an exposure control drain region (34) between said first and second exposure control gates.

3. A CCD image sensor according to claim 1 or claim 2 wherein isolation regions (60) are provided between adjacent individual imaging photodetectors (14) of said first and second linear arrays, in order to collect diffusing photogenerated charges, said isolation regions being coupled to a drain to remove diffusing photogenerated charges.

## Patentansprüche

1. CCD-Bildsensor (10) mit:
(a) einer ersten (40) und einer zweiten (41) linearen Anordnung einzelner, entlang einer Abtastlinie (SL) angeordneter Abbildungsfotodetektoren, wobei jeder dieser Abbildungsfotodetektoren (14) einen Sammelbereich aufweist, der in einer parallelen Richtung zur Abtastlinie eine Länge und eine Breite darstellt, um durch Lichtinformation erzeugte Ladungsträger zu sammeln, mit denen die Abbildungsfotodetektoren beaufschlagbar sind;
(b) einem lichtabgeschirmten Bereich (51) auf jedem der Abbildungsfotodetektoren, welche parallel zur Abtastlinie eine Länge aufweist, die im wesentlichen der Hälfte der Länge jeder der Abbildungsfotodetektoren entspricht, um Fotodetektoraperturen (50) einer Länge zu bilden, die kürzer als die Länge der Abbildungsfotodetektoren ist, so dass in paralleler Richtung zur Abtastlinie benachbarte Fotodetektoraperturen in der ersten und zweiten linearen Anordnung voneinander durch nicht Fotodetektoren enthaltende Bereiche getrennt sind; wobei
(c) die zweite lineare Anordnung (41) parallel zur ersten Anordnung (40) angeordnet angeordnet ist und zu dieser entlang der Abtastlinie um ca. die Hälfte einer Fotodetektorlänge versetzt angeordnet ist, derart, dass im wesentlichen alle Lichtinformationen, die zwischen benachbarten Fotodetektoraperturen der ersten linearen Anordnung auftreffen, durch die Fotodetektoraperturen der zweiten linearen Anordnung empfangbar sind;
(d) ersten, zur ersten linearen Anordnung benachbarten CCD-Registermitteln (16a), um die von den Abbildungsfotodetektoren der ersten linearen Anordnung erzeugten Ladungsträger zu empfangen und vorübergehend zu speichern; und
(e) einem zweiten, zur zweiten linearen Anordnung benachbarten CCD-Register (16b), um die von den Abbildungsfotodetektoren der zweiten linearen Anordnung erzeugten Ladungsträger zu empfangen und vorübergehend zu speichern,
dadurch gekennzeichnet, dass:
(f) sich die erste und die zweite lineare Anordnung aus einzelnen Fotodetektoren einander nicht überlagern und zueinander in einer zur Abtastlinie senkrechten Richtung nicht benachbart sind;
(g) jeder der einzelnen Abbildungsfotodetektoren eine Fotodetektorapertur (50) aufweist, die im wesentlichen die Hälfte der Länge und die Hälfte der Breite des Abbildungsfotodetektors misst und mittig innerhalb des Abbildungsfotodetektors angeordnet ist, und dass der lichtabgeschirmte Bereich (51) den Fotodetektorbereich umgibt und den verbleibenden Bereich des Abbildungsfotodetektors belegt, und
(h) eine elektronische Belichtungsstruktur (34,36) zur Steuerung der Belichtung der ersten und zweiten linearen Anordnung vorgesehen ist, wobei die elektronische Belichtungsstruktur zwischen der ersten und zweiten linearen Anordnung angeordnet ist.

2. CCD-Bildsensor nach Anspruch 1, dadurch gekennzeichnet, dass die elektronische Belichtungsstruktur folgendes umfasst:
i)ein der ersten linearen Anordnung benachbartes erstes Belichtungssteuerungsgatter (36);
ii) ein der zweiten linearen Anordnung benachbartes zweites Belichtungssteuerungsgatter (36); und
iii) einen Belichtungssteuerungs-Ableitbereich (34) zwischen dem ersten und zweiten Belichtungssteuerungsgatter.

3. CCD-Bildsensor nach Anspruch 1 oder 2, dadurch gekennzeichnet, dass die Isolationsbereiche (60) zwischen benachbarten, einzelnen Abbildungsfotodetektoren (14) der ersten und zweiten linearen Anordnung vorgesehen sind, um diffundierende, fotoerzeugte Ladungen zu sammeln, wobei die Isolationsbereiche mit einer Ableitung zur Beseitigung diffundierender, fotoerzeugter Ladungen verbunden sind.

## Revendications

1. Capteur d'image à dispositif à transfertde charges (CDD) (10) comprenant :
(a) un premier (40) et un second (41) réseaux linéaires de photodétecteurs de formation d'image individuels alignés suivant une ligne de balayage (SL), chacun desdits photodétecteurs de formation d'image (14) présentant une zone collectrice présentant une longueur dans une direction parallèle à la ligne de balayage et une largeur, afin de recueillir des porteurs de charges fournis par les informations lumineuses appliquées auxdits photodétecteurs de formation d'image,
(b) un masque de lumière (51) sur chacun desdits photodétecteurs de formation d'image présentant, dans la direction parallèle à la ligne de balayage, une longueur sensiblement égale à la moitié de la longueur de chacun desdits photodétecteurs de formation d'image de manière à ménager des ouvertures de photodétection (50) d'une longueur inférieure à la longueur des photodétecteurs de formation d'image de sorte que, dans la direction parallèle à la ligne de balayage, des ouvertures de photodétection adjacentes dans lesdits premier et second réseaux linéaires soient séparées les unes des autres par des zones de non photodétection,
(c) ledit second réseau linéaire (41) étant parallèle audit premier réseau (40) et décalé par rapport audit premier réseau linéaire le long de ladite ligne de balayage, d'approximativement la moitié de la taille d'une longueur d'un photodétecteur de sorte que pratiquement toutes les informations lumineuses appliquées entre des ouvertures de photodétection adjacentes dudit premier réseau linéaire soient détectées par des ouvertures de photodétection dudit second réseau linéaire,
(d) un premier moyen enregistreur CCD (16a) adjacent audit premier réseau linéaire afin de recevoir et de stocker temporairement les porteurs de charge générés par les photodétecteurs de formation d'image dudit premier réseau linéaire, et
(e) un second moyen enregistreur CCD (16b) adjacent audit second réseau linéaire afin de recevoir et de stocker temporairement les porteurs de charge générés par les photodétecteurs de formation d'image dudit second réseau linéaire.
Caractérisé en ce que :
(f) lesdits premier et second réseaux linéaires de photodétecteurs individuels ne sont pas en chevauchement et ne sont pas adjacents l'un à l'autre le long d'une direction perpendiculaire à la ligne de balayage,
(g) chacun desdits photodétecteurs de formation d'image individuels présentant une ouverture de photodétection (50) constituée avec des dimensions sensiblement égales à la moitié de la longueur et la moitié de la largeur et centrée à l'intérieur du photodétecteur de formation d'image et ladite zone de masque de lumière (51) entourant la zone de photodétection utilisant la zone restante du photodétecteur de formation d'image, et
(h) une structure d'exposition électronique destinée à commander l'exposition lumineuse desdits premier et second réseaux linéaires, ladite structure d'exposition électronique étant située entre lesdits premier et second réseaux linéaires.

2. Capteur d'image à dispositif à transfert de charges selon la revendication 1, dans lequel ladite structure d'exposition électronique comprend :
(i) une première grille de commande d'exposition (36) à proximité dudit premier réseau linéaire,
(ii) une seconde grille de commande d'exposition (36) adjacente audit second réseau linéaire, et
(iii) une région de drain de commande d'exposition (34) entre lesdites première et seconde grilles de commande d'exposition.

3. Capteur d'image à dispositif à transfert de charges selon la revendication 1 ou la revendication 2, dans lequel des régions d'isolement (60) sont prévues entre des photodétecteurs de formation d'image individuels adjacents (14) desdits premier et second réseaux linéaires de manière à recueillir les charges photogénérées se diffusant, lesdites régions d'isolement étant reliées à un drain pour éliminer les charges photogénérées se diffusant.
